# EUROPEAN PATENT APPLICATION

(11) **EP 4 651 240 A1**
(43) Date of publication of application: **19.11.2025**
(21) Application number: 24852270.8
(22) Date of filing: 06.08.2024
(51) Int. Cl.: H01M 4/62, H01M 4/1395, H01M 4/1393, H01M 4/38, H01M 4/587, H01M 4/36, H01M 10/052, C08L 33/02, C08L 1/28

(54) **BINDER COMPOSITION, AND NEGATIVE ELECTRODE FOR SECONDARY BATTERY AND LITHIUM SECONDARY BATTERY COMPRISING BINDER COMPOSITION**

(30) Priority: 07.08.2023 KR 20230103197; 01.08.2024 KR 20240102770
(71) Applicant: LG Energy Solution, Ltd., Seoul 07335 (KR)
(72) Inventor: NOH, Jae Kyo, Daejeon 34122 (KR)
(74) Representative: Hoffmann Eitle
(86) International application number: PCT/KR2024/011566
(87) International publication number: WO 2025/033916

(57) **Abstract**

The present invention provides a binder composition, and a negative electrode for a secondary battery, and a lithium secondary battery, each comprising the binder composition. The binder composition of the present invention includes: a first binder resin; a second binder resin; and water, wherein the binder composition may include: lithium-substituted polyacrylic acid having a weight average molecular weight (Mw) of 300,000-1,500,000 g/mol as the first binder resin; and lithium-substituted carboxymethyl cellulose having a weight average molecular weight (Mw) of 300,000-1,500,000 g/mol as the second binder resin.

## Description

### TECHNICAL FIELD

### Cross-reference to Related Applications

This application claims priority from Korean Patent Application Nos. 10-2023-0103197, filed on August 7, 2023, and 10-2024-0102770, filed on August 1, 2024, the disclosures of which are incorporated by reference herein.

The present disclosure relates to a binder composition, and a negative electrode for a secondary battery and a lithium secondary battery which include the binder composition, and particularly, to a binder composition capable of suppressing volume expansion of a negative electrode, and a negative electrode for a secondary battery which includes the binder composition, and a lithium secondary battery in which cycle characteristics are improved by including the negative electrode.

### BACKGROUND ART

Demand for secondary batteries as an energy source has been significantly increased as technology development and demand with respect to mobile devices have increased. Among these secondary batteries, lithium secondary batteries having high energy density, high voltage, and long cycle life have been commercialized and widely used.

A lithium secondary battery includes a positive electrode, a negative electrode, a separator disposed between the positive electrode and the negative electrode to separate them, and an electrolyte solution that electrochemically communicates with the positive electrode and the negative electrode.

The lithium secondary battery is typically prepared by using a lithium-intercalated compound, such as LiCoO₂ and LiMn₂O₄, in the positive electrode and a carbon-based material, into which lithium is not intercalated, in the negative electrode, and operates while lithium ions intercalated into the positive electrode move to the negative electrode through the electrolyte solution during charge, and the lithium ions move again from the negative electrode to the positive electrode during discharge.

The carbon-based material, such as graphite, used as a negative electrode material has excellent stability and reversibility, but is limited in terms of capacity. Thus, recently, in order to address high-capacity demands of applications such as electric vehicles (EV), research is being actively conducted to use a silicon (Si)-based material as a non-carbon-based material with high theoretical capacity.

Since the silicon (Si)-based material exists abundantly in nature and has a theoretical specific capacity of 4,200 mAh/g which is about ten times higher than that of a commercial graphite negative electrode (372 mAhg⁻¹), it is receiving great attention as a next-generation negative electrode material for a high-energy density lithium-ion battery. Also, the silicon-based material has advantages of low-cost, environmentally friendly due to non-toxicity, and low operating voltage (<0.5 V vs. Li⁺/Li).

However, since the silicon-based material has high initial irreversible capacity which leads to severe lithium depletion, it has a disadvantage of lower initial efficiency than the carbon-based negative electrode active material. Particularly, since the silicon-based material experiences rapid volume expansion (≥300%) due to changes in crystal structure caused by intercalation and deintercalation of lithium ions during charge and discharge, the silicon-based material has a problem in that it is difficult to secure stable output characteristics and cycle characteristics, for example, resistance is increased due to local isolation or damage of the electrode, and a phenomenon of a rapid decrease in capacity of the secondary battery occurs.

Therefore, in order to use the silicon-based material as a negative electrode active material, research and development is required to ensure durability and charge and discharge efficiency by solving the problem of degradation due to the volume expansion of the silicon-based material.

### DISCLOSURE OF THE INVENTION

### TECHNICAL PROBLEM

An aspect of the present disclosure provides a binder composition having a specific composition, and provides a negative electrode for a secondary battery which has excellent durability and charge and discharge efficiency by using the binder composition in combination with a silicon-based negative electrode active material to improve a problem of degradation due to volume expansion of the silicon-based negative electrode active material and secure excellent electrode adhesion at the same time. Also, another aspect of the present disclosure provides a lithium secondary battery in which output characteristics and cycle characteristics are improved by including the negative electrode for a secondary battery.

### TECHNICAL SOLUTION

[1] The present disclosure provides a binder composition including a first binder resin, a second binder resin, and water,
   wherein the first binder resin includes a lithium-substituted polyacrylic acid having a weight-average molecular weight (Mw) of 300,000 g/mol to 1,500,000 g/mol, and wherein the second binder resin includes a lithium-substituted carboxymethyl cellulose having a weight-average molecular weight (Mw) of 50,000 g/mol to 1,000,000 g/mol.
[2] The present disclosure provides the binder composition of [1] above, wherein the weight-average molecular weight (Mw) of the first binder resin is in a range of 500,000 g/mol to 1,500,000 g/mol.
[3] The present disclosure provides the binder composition of [1] or [2] above, wherein the weight-average molecular weight (Mw) of the second binder resin is in a range of 100,000 g/mol to 1,000,000 g/mol.
[4] The present disclosure provides the binder composition of at least one of [1] to [3] above, wherein a total amount of the first binder resin and the second binder resin is in a range of 0.2 wt% to 5.0 wt% based on a total amount of the binder composition.
[5] The present disclosure provides the binder composition of at least one of [1] to [4] above, wherein a weight ratio of the first binder resin to the second binder resin is in a range of 3:7 to 5:5.
[6] The present disclosure provides the binder composition of at least one of [1] to [5] above, wherein viscosity of the binder composition is in a range of 500 cP to 50,000 cP in a 2.5 wt% aqueous solution state at 25°C.
[7] The present disclosure provides a negative electrode active material slurry including a silicon-based negative electrode active material and the binder composition of [1] above.
[8] The present disclosure provides the negative electrode active material slurry of [7] above, wherein the negative electrode active material slurry further includes a carbon-based negative electrode active material.
[9] The present disclosure provides the negative electrode active material slurry of [7] or [8] above, wherein a weight ratio of the carbon-based negative electrode active material to the silicon-based negative electrode active material is in a range of 80:20 to 99:1.
[10] The present disclosure provides the negative electrode active material slurry of at least one of [7] to [9] above, wherein the binder composition is included in an amount of 0.1 wt% to 5.0 wt% based on a total weight of the negative electrode active material slurry.
[11] The present disclosure provides the negative electrode active material slurry of at least one of [7] to [10] above, wherein the negative electrode active material slurry further includes a third binder resin.
[12] The present disclosure provides the negative electrode active material slurry of at least one of [7] to [11] above, wherein the third binder resin is a styrene-butadiene rubber.
[13] The present disclosure provides the negative electrode active material slurry of at least one of [7] to [12] above, wherein the third binder resin is included in an amount of 0.1 wt% to 5.0 wt% based on a total weight of the negative electrode active material slurry.
[14] The present disclosure provides the negative electrode active material slurry of at least one of [7] to [13] above, wherein the negative electrode active material slurry further includes a conductive agent.
[15] The present disclosure provides the negative electrode active material slurry of at least one of [7] to [14] above, wherein the conductive agent is at least one of a SWCNT (single-walled carbon nanotube), a TWCNT (thin-walled carbon nanotube), a MWCNT (multi-walled carbon nanotube), carbon fibers, and graphene.
[16] The present disclosure provides a negative electrode including a negative electrode current collector; and a negative electrode active material layer disposed on at least one surface of the negative electrode current collector, wherein the negative electrode active material layer is formed by applying the negative electrode active material slurry of [7] above.
[17] The present disclosure provides the negative electrode of [16] above, wherein the negative electrode has an adhesion of 23.2 gf/20 mm to 25 gf/20 mm, and has an energy efficiency of 96% or more in a 100-cycle lifetime evaluation.
[18] The present disclosure provides a lithium secondary battery including the negative electrode of [16] above.

### ADVANTAGEOUS EFFECTS

Since a binder composition of the present disclosure includes a lithium-substituted polyacrylic acid having a weight-average molecular weight (Mw) of 300,000 g/mol to 1,500,000 g/mol and a lithium-substituted carboxymethyl cellulose having a weight average molecular weight (Mw) of 50,000 g/mol to 1,000,000 g/mol at a specific composition ratio, it may effectively suppress volume expansion of a silicon-based active material to not only prevent cracks on a surface of a negative electrode, but also to improve adhesion between a negative electrode active material layer and a current collector and enhance lithium ion mobility, and thus, the binder composition of the present disclosure may prepare a negative electrode which may ensure better durability and charge and discharge efficiency. Accordingly, if the negative electrode of the present disclosure is used, a lithium secondary battery with improved output characteristics and cycle characteristics may be achieved.

### MODE FOR CARRYING OUT THE INVENTION

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

In this specification, a "weight-average molecular weight" may be measured using a gel permeation chromatography (GPC) instrument. Specifically, as GPC conditions in the present disclosure, the weight-average molecular weight is measured by using 1200 series by Agilent Technologies, a PL mixed B column by Agilent Technologies may be used in this case, and tetrahydrofuran (THF) or dimethylformamide (DMF) may be used as a solvent. Unless otherwise specified in this specification, a molecular weight may denote the weight-average molecular weight.

Also, "viscosity" in this specification may be measured for a test subject in a 2.5 wt% aqueous solution state using a B-type viscometer (TOKIMEC) or a rheometer (TA instruments). Specifically, the "viscosity" in the present disclosure may be measured for the test subject in a 2.5 wt% aqueous solution state using the B-type viscometer (TOKIMEC) (25°C, 12 rpm).

Conventionally, when preparing a lithium secondary battery, a mixture of styrene-butadiene rubber (SBR) and carboxymethyl cellulose (CMC), or a binder, such as polyvinylidene fluoride (PVDF), has mainly been used as a negative electrode binder.

The styrene-butadiene rubber is advantageous in that it does not significantly affect conductivity when used as a binder, but since it has a relatively weak binding force, an excessive amount of the binder must be used to maintain the binding force, and, as a result, it is disadvantageous in that electrical conductivity is decreased and cycle characteristics are significantly degraded. The carboxymethyl cellulose (CMC), a thickener used in combination with the styrene-butadiene rubber (SBR), is advantageous in that it is inexpensive and easy to be prepared, but since it not only has a weak binding force with a surface of a silicon-based negative electrode active material, but also has a weak binding force with a byproduct decomposed from an electrolyte salt, it is disadvantageous in that it is difficult to form a robust solid electrolyte interphase (SEI) film. Also, although the polyvinylidene fluoride has almost no expansion and may secure an excellent binding force, it is disadvantageous in that it expands while reacting with most organic electrolytes, such as propylene carbonate, and damages a portion of a negative electrode. Particularly, since the above binders do not effectively suppress volume expansion of the silicon-based active material in the negative electrode including the silicon-based active material during charge and discharge, structural destruction, peeling, or deformation of the negative electrode is caused, and, as a result, there is a problem in that capacity and cycle characteristics of the secondary battery are degraded.

Thus, as a result of a significant amount of research conducted into developing a binder which may secure excellent adhesion between negative electrode active material particles and/or between a negative electrode active material and a current collector and may effectively suppress the volume expansion of the silicon-based negative electrode active material at the same time, the present inventors have found that, in a case in which a lithium-substituted polyacrylic acid having a specific weight-average molecular weight range and a lithium-substituted carboxymethyl cellulose having a specific weight-average molecular weight range are used together at a specific composition ratio, excellent electrode adhesion (binding force) may be secured, lithium ion mobility may be improved, and a robust film may be formed on the surface of the silicon-based negative electrode active material to suppress the volume expansion at the same time, thereby leading to the completion of the present disclosure.

Hereinafter, the present disclosure will be described in more detail.

A binder composition according to the present disclosure, a negative electrode active material slurry and a negative electrode which include the same, and a lithium secondary battery include at least one of configurations disclosed below, and may include any combination between technically possible configurations among the configurations below.

### Binder Composition

The binder composition according to the present disclosure includes
a first binder resin, a second binder resin, and water,
wherein the first binder resin may include a lithium-substituted polyacrylic acid having a weight-average molecular weight (Mw) of 300,000 g/mol to 1,500,000 g/mol, and
wherein the second binder resin may include a lithium-substituted carboxymethyl cellulose having a weight-average molecular weight (Mw) of 50,000 g/mol to 1,000,000 g/mol.

### (1-1) First Binder Resin

The first binder resin may include a lithium-substituted polyacrylic acid.

As the lithium-substituted polyacrylic acid, one type of the lithium-substituted polyacrylic acid may be used, or two or more types of the lithium-substituted polyacrylic acids having different molecular weights may be used together.

In a case in which a lithium-unsubstituted polyacrylic acid is used as a conventional binder resin for a negative electrode active material slurry, an internal pressure is increased due to hydrogen gas generated from the polyacrylic acid during charge and discharge, and, as a result, cell swelling may occur. Furthermore, since a Lewis acid (HF) is formed by a side reaction of the generated hydrogen with a fluorine element decomposed from an electrolyte salt, an SEI-forming effect may be reduced to cause side reactions such as electrode current collector corrosion and cell internal corrosion.

To improve these problems, since a lithium-substituted polyacrylic acid, instead of the lithium-unsubstituted polyacrylic acid, is used as the first binder resin in the present disclosure, battery expansion may be prevented by suppressing generation of hydrogen gas from the polyacrylic acid. Furthermore, since the lithium-substituted polyacrylic acid may form a film capable of suppressing volume expansion on a surface of a silicon-based active material (SiOx) due to a terminal -COO⁻ functional group included in its structure, not only crack induction may be suppressed, but a binding force between the silicon-based active materials (SiOx) and adhesion between the silicon-based active material and a surface of a current collector may also be secured to prevent exfoliation of the silicon-based negative electrode active material from the surface of the current collector, and thus, a phenomenon of peeling and isolation of a negative electrode may be reduced. Also, since the lithium-substituted polyacrylic acid may form a robust film containing a fluorine component on a surface of the negative electrode by reaction of a substituted -Li⁺ group with an anion component decomposed from an electrolyte salt, for example, an anion component, such as PF₆⁻ or FSI⁻, decomposed from LiPF₆ or LiFSI, the volume expansion of the silicon-based negative electrode may be effectively suppressed during repeated charge and discharge. Furthermore, since the lithium-substituted polyacrylic acid has higher electrical conductivity than the lithium-unsubstituted polyacrylic acid in the same amount range, it may exhibit better high-efficiency charge and discharge characteristics. As described above, since the binder composition including the lithium-substituted polyacrylic acid as the first binder resin is used in the present disclosure, a lithium secondary battery having excellent charge and discharge capacity and cycle lifetime (capacity retention) may be achieved.

The lithium-substituted polyacrylic acid of the present disclosure is in a form in which all hydrogens of a carboxyl group (COOH) included in its structure are substituted with lithium, wherein it may be formed by a neutralization reaction after adding lithium hydroxide (LiOH) to polyacrylic acid. Specifically, the lithium-substituted polyacrylic acid may be formed by adding the lithium hydroxide such that an amount of the carboxyl group of the polyacrylic acid and an amount of the lithium are in a molar ratio of 1:1, and completely neutralizing the polyacrylic acid while stirring for 12 hours at room temperature (25°C). In this case, since the polyacrylic acid is not completely neutralized when an amount of the lithium hydroxide added is small, a side reaction may be induced by hydrogen generated from the polyacrylic acid during charge and discharge. Also, in a case in which a somewhat large amount of the lithium hydroxide is added, since an -OH functional group of the lithium hydroxide, which does not participate in the neutralization reaction, causes a side reaction that interferes with bonding of the -COO⁻ functional group while being bonded to the surface of the silicon-based negative electrode active material, a robust SEI film may not be formed on the surface of the negative electrode to degrade life characteristics of the battery.

A pH of the neutralized lithium-substituted polyacrylic acid may be in a range of 6 to 9.

Particularly, the weight-average molecular weight (Mw) of the lithium-substituted polyacrylic acid of the present disclosure may be in a range of 300,000 g/mol to 1,500,000 g/mol, particularly 500,000 g/mol to 1,500,000 g/mol, and more particularly 500,000 g/mol to 1,000,000 g/mol. Preferably, the weight-average molecular weight (Mw) of the lithium-substituted polyacrylic acid of the present disclosure may be in a range of 600,000 g/mol to 800,000 g/mol. In a case in which the weight-average molecular weight of the lithium-substituted polyacrylic acid is less than 300,000 g/mol, since the adhesion with the active material or the current collector is insufficient, an effect of improving adhesive characteristics of the electrode and the cycle characteristics of the battery may be insignificant. Also, if the weight-average molecular weight of the lithium-substituted polyacrylic acid is greater than 1,500,000 g/mol, since viscosity of the binder composition is increased, it is not only difficult to prepare an electrode sheet, but the adhesion of the electrode is also excessively increased so that it acts as a resistor in the electrode, and thus, the mobility of lithium ions may be reduced. Furthermore, if manufacturing costs for improving processability of the lithium-substituted polyacrylic acid are added, a disadvantage of increasing a total unit price of a cell may occur.

In the present disclosure, one type of the lithium-substituted polyacrylic acid may be used as the first binder resin, or two or more types of the lithium-substituted polyacrylic acids having different weight-average molecular weights may be used in appropriate combination in order to improve the adhesion and processability and to improve an effect of suppressing the volume expansion of the silicon-based material. The lithium-substituted polyacrylic acid having a relatively higher molecular weight may contribute to increase the adhesion of the binder and improve lifetime stability of the battery, and the lithium-substituted polyacrylic acid having a relatively lower molecular weight may increase a solid content during preparation of the slurry and may contribute to improve the processability of the binder by increasing flowability of the slurry. Specifically, in the present disclosure, a first lithium-substituted polyacrylic acid having a relatively lower molecular weight (weight-average molecular weight (Mw): 300,000 g/mol to less than 1,000,000 g/mol) and a second lithium-substituted polyacrylic acid having a relatively higher molecular weight (weight-average molecular weight (Mw): 1,000,000 g/mol to 1,500,000 g/mol) may be used together, if necessary.

### (1-2) Second Binder Resin

In the present disclosure, the second binder resin may include a lithium-substituted carboxymethyl cellulose.

If a lithium-unsubstituted carboxymethyl cellulose (CMC-Na) is used as a conventional binder resin, since sodium (Na⁺) ions contained in the carboxymethyl cellulose hinder movement of lithium ions while acting as impurities, resistance in the electrode is increased, and, as a result, lifetime and output characteristics of the battery are degraded.

In order to improve this problem, in a case in which the lithium-substituted carboxymethyl cellulose (CMC-Li), instead of the lithium-unsubstituted carboxymethyl cellulose (CMC-Na), is included as the second binder resin in the present disclosure, since the increase in resistance due to the Na⁺ ions is prevented and intercalation/deintercalation of lithium into/from the negative electrode during charge and discharge is facilitated, an effect of improving lifetime may be achieved.

Particularly, the lithium-substituted carboxymethyl cellulose (CMC-Li) contains a plurality of cellulose functional groups with excellent adhesion in its structure. Accordingly, if the lithium-substituted carboxymethyl cellulose (CMC-Li) is used as the second binder resin, the binding force between the silicon-based active materials (SiOx) or the adhesion between the silicon-based active material and the current collector, which has been reduced due to the influence of the acrylic acid group contained in the first binder, may be further secured, and a -COO-Li⁺ functional group included in the structure may react with the anion component generated by the decomposition of the electrolyte salt during charge and discharge to form a more robust film on the surface of the negative electrode. Thus, the expansion of the silicon-based negative electrode active material caused during charge and discharge may be more effectively suppressed.

The lithium-substituted carboxymethyl cellulose is in a form in which all sodium (Na⁺) elements contained in the carboxymethyl cellulose (CMC-Na) structure are substituted with lithium, wherein it may be formed through a neutralization reaction by adding lithium hydroxide to carboxymethyl cellulose. Specifically, the lithium-substituted carboxymethyl cellulose may be formed by adding the lithium hydroxide such that an amount of the carboxyl group of the carboxymethyl cellulose (CMC-Na) and an amount of the lithium are in a molar ratio of 1:1, and completely neutralizing the carboxymethyl cellulose (CMC-Na) while stirring for 12 hours at room temperature (25°C). In this case, if an amount of the lithium hydroxide added is small, since the carboxymethyl cellulose is not completely neutralized, some of the sodium (Na⁺) ions contained in the carboxymethyl cellulose (CMC-Na) structure are not substituted and remain. The remaining sodium (Na+) ions hinder the movement of the lithium ions by remaining on the surface of the negative electrode and a lithium pathway while act as the impurities by being dissociated in the electrolyte solution during a subsequent battery operation as described above, and, as a result, since the resistance in the electrode increases and the conductivity decreases, the life characteristics of the battery may be degraded. Also, if a somewhat excessive amount of the lithium hydroxide is added when the neutralization reaction is performed, a negative electrode active material slurry has a high pH due to the excess lithium hydroxide remaining after the substitution. As a result, since an agglomeration phenomenon is increased in the negative electrode active material slurry, roughness of the surface of the negative electrode is intensified, and accordingly, there is a disadvantage in that the life characteristics of the battery are degraded.

Particularly, the weight-average molecular weight (Mw) of the lithium-substituted carboxymethyl cellulose (CMC-Li) of the present disclosure may be in a range of 50,000 g/mol to 1,000,000 g/mol, particularly 100,000 g/mol to 1,000,000 g/mol, and more particularly 100,000 g/mol to 500,000 g/mol. Preferably, the weight-average molecular weight (Mw) of the lithium-substituted carboxymethyl cellulose (CMC-Li) of the present disclosure may be in a range of 100,000 g/mol to 300,000 g/mol. In a case in which the weight-average molecular weight of the lithium-substituted carboxymethyl cellulose (CMC-Li) is less than 50,000 g/mol, the viscosity of the binder composition is decreased to increase drying temperature and drying time, and, as a result, wrinkles and cracks may occur on the surface of the electrode, and, since the adhesion may be decreased due to the reduction of the binding force between the negative electrode active material and the current collector, the exfoliation of the negative electrode active material may occur. Also, if the weight-average molecular weight of the lithium-substituted carboxymethyl cellulose (CMC-Li) is greater than 1,000,000 g/mol, since the viscosity of the binder composition is increased, it is not only difficult to prepare the electrode sheet, but the adhesion of the electrode is also excessively increased so that it acts as a resistor in the electrode, and thus, the mobility of the lithium ions may be reduced.

### (1-3) Solvent

A remaining portion excluding the first binder resin and the second binder resin in the binder composition of the present disclosure may include a solvent unless otherwise specified, and may include water as the solvent.

A total amount of the first binder resin and the second binder resin in the binder composition of the present disclosure may be in a range of 0.2 wt% to 5.0 wt% based on a total amount of the binder composition.

In a case in which the total amount of the first binder resin and the second binder resin satisfies the above range, formulation stability of the binder composition may be maintained, and an effect of improving the adhesion of the binder and battery performance may be achieved at the same time. If the total amount of the first binder resin and the second binder resin is 0.2 wt% or more, the adhesion (binding force) of the binder and cycle performance of the battery may be improved, and if the total amount of the first binder resin and the second binder resin is 5.0 wt% or less, since dispersibility may be improved during the preparation of the electrode slurry by preventing the increase in the viscosity of the binder composition, coagulation of the electrode slurry or a decrease in activity may be prevented.

Specifically, the total amount of the first binder resin and the second binder resin may be in a range of 0.2 wt% to 3.0 wt%, more specifically, 0.2 wt% to 1.0 wt% based on the total amount of the binder composition.

The first binder resin and the second binder resin in the binder composition of the present disclosure may be mixed in a weight ratio of 3:7 to 5:5 and used, or may be mixed in a weight ratio of 4:6 to 5:5 and used.

In a case in which the weight ratio of the first binder resin to the second binder resin satisfies the above range, the conductivity may be improved by improving mobility of Li⁺ ions and electrons due to the improvement of the binding force (adhesion) of the silicon-based negative electrode active material, cracks caused by the volume expansion of the silicon-based negative electrode active material may be suppressed, the phenomenon of peeling and isolation of the negative electrode may be reduced by preventing the exfoliation of the silicon-based negative electrode active material from the surface of the current collector at the same time, and excellent charge and discharge capacity and cycle life characteristics may be secured by forming a more robust film on the surface of the negative electrode.

In this case, when a ratio of the second binder resin to the first binder resin is less than 5 as a weight ratio, since the adhesion is relatively reduced by the action of decreasing the amount of the cellulose, the effect of suppressing the volume expansion of the silicon-based active material, an effect of preventing the isolation of the negative electrode, and a film-forming effect may be relatively insignificant. Also, in a case in which the ratio of the second binder resin to the first binder resin is greater than 7 as a weight ratio, for example, in a case in which the amount of the lithium-substituted carboxymethyl cellulose in the binder composition is greater than the above range, since an effect of forming a fluorine-containing film on the surface of the silicon-based negative electrode active material is reduced due to the influence of some hydroxyl groups (-OH) present in the lithium-substituted carboxymethyl cellulose structure, particle cracks occur in the silicon-based active material during charge and discharge, and, as a result, the volume expansion and the decrease in conductivity may occur to somewhat degrade the life characteristics of the battery.

The viscosity of the binder composition of the present disclosure may be in a range of 500 cP to 50,000 cP in a 2.5 wt% aqueous solution state at a temperature of 25°C, may specifically be in a range of 1,000 cP to 50,000 cP, may more specifically be in a range of 1,000 cP to 10,000 cP, and may preferably be in a range of 3,000 cP to 5,000 cP. Since the viscosity of the binder composition of the present disclosure satisfies the above range, the formulation stability of the binder composition may be maintained while securing excellent adhesion of the binder and the dispersibility may be improved during the preparation of the electrode slurry to prevent the coagulation of the electrode slurry and achieve an effect of improving the battery performance.

### Negative Electrode Active Material Slurry

According to another embodiment, the present disclosure provides a negative electrode active material slurry including a silicon-based negative electrode active material and the binder composition of the present disclosure. The negative electrode active material slurry of the present disclosure may additionally include a carbon-based negative electrode active material, if necessary. Also, the negative electrode active material slurry of the present disclosure may additionally include a third binder resin and/or a conductive agent, if necessary.

### (2-1) Silicon-based Negative Electrode Active Material

Since the silicon-based negative electrode active material exhibits higher capacity characteristics than the carbon-based negative electrode active material, better capacity characteristics than those of the carbon-based negative electrode active material may be obtained.

Representative examples of the silicon-based negative electrode active material may be at least one selected from the group consisting of metallic silicon (Si), silicon oxide (SiOₓ, where 0<x<2), silicon carbide (SiC), and a Si-Y alloy (where Y is an element selected from the group consisting of alkali metal, alkaline earth metal, a Group 13 element, a Group 14 element, transition metal, a rare earth element, and a combination thereof, and is not Si). The element Y may be selected from the group consisting of magnesium (Mg), calcium (Ca), strontium (Sr), barium (Ba), radium (Ra), scandium (Sc), yttrium (Y), titanium (Ti), zirconium (Zr), hafnium (Hf), rutherfordium (Rf), vanadium (V), niobium (Nb), tantalum (Ta), dubnium (Db), chromium (Cr), molybdenum (Mo), tungsten (W), seaborgium (Sg), technetium (Tc), rhenium (Re), bohrium (Bh), iron (Fe), lead (Pb), ruthenium (Ru), osmium (Os), hassium (Hs), rhodium (Rh), iridium (Ir), palladium (Pd), platinum (Pt), copper (Cu), silver (Ag), gold (Au), zinc (Zn), cadmium (Cd), boron (B), aluminum (Al), gallium (Ga), tin (Sn), indium (In), titanium (Ti), germanium (Ge), phosphorus (P), arsenic (As), antimony (Sb), bismuth (Bi), sulfur (S), selenium (Se), tellurium (Te), polonium (Po), and a combination thereof.

### (2-2) Carbon-based Negative Electrode Active Material

The negative electrode active material slurry of the present disclosure may additionally include a carbon-based negative electrode active material, if necessary. As the carbon-based negative electrode active material, various carbon-based negative electrode active materials used in the art, for example, graphite-based materials such as natural graphite, artificial graphite, and Kish graphite; pyrolytic carbon, mesophase pitch based carbon fiber, meso-carbon microbeads, mesophase pitches, high-temperature sintered carbon such as petroleum or coal tar pitch derived cokes, soft carbon, and hard carbon may be used. A shape of the carbon-based negative electrode active material is not particularly limited, and materials of various shapes, such as an irregular shape, planar shape, flaky shape, spherical shape, or fibrous shape, may be used.

When the carbon-based negative electrode active material and the silicon-based negative electrode active material are mixed and used, a weight ratio of the carbon-based negative electrode active material to the silicon-based negative electrode active material may be in a range of 80:20 to 99:1, or may be in a range of 85:15 to 95:5, and may more specifically be in a range of 97:3 to 99:1.

In a case in which the mixing ratio of the carbon-based negative electrode active material to the silicon-based negative electrode active material satisfies the above range, since the volume expansion of the silicon-based negative electrode active material is suppressed while the capacity characteristics are improved, excellent cycle performance may be secured.

A total amount of the negative electrode active material included may be in a range of 80 wt% to 99 wt% based on a total weight of the negative electrode active material slurry. In a case in which the total amount of the negative electrode active material satisfies the above range, excellent capacity characteristics and electrochemical properties may be obtained.

### (2-3) Binder Composition

Since a description of the binder composition included in the negative electrode active material slurry of the present disclosure overlaps with the above-mentioned content, the description thereof is omitted.

However, with respect to an amount of the binder composition, the binder composition may be included in an amount of 0.1 wt% to 5.0 wt%, or may be included in an amount of 0.1 wt% to 3.0 wt% based on the total weight of the negative electrode active material slurry of the present disclosure.

In a case in which the binder composition is included within the above amount range, a high-capacity design is possible and an effect of improving the life characteristics may be achieved. Specifically, in a case in which the binder composition is included in an amount of less than 0.1 wt%, not only the effect of suppressing the volume expansion of the silicon-based negative electrode active material during charge and discharge is insignificant, but also the adhesion between the current collector and the active material may not be secured to cause the exfoliation of the active material. Also, in a case in which the amount of the binder composition is greater than 5.0 wt%, the capacity may be reduced due to a decrease in amount of a positive electrode active material which is caused by the binder composition included in a relatively large amount, and the life characteristics may be degraded due to resistance action in the electrode which is caused by the binder.

### (2-4) Third Binder Resin

The negative electrode active material slurry of the present disclosure may additionally include a third binder resin to improve flexibility of the negative electrode.

The third binder resin may include a styrene-butadiene rubber.

The third binder resin may be included in an amount of 0.1 wt% to 5.0 wt% based on the total weight of the negative electrode active material slurry.

In a case in which the third binder resin is included within the above amount range, an effect of suppressing breakage of the electrode during assembly of the electrode or repeated charge and discharge may be achieved by improving the flexibility of the negative electrode. Specifically, in a case in which the third binder resin is included in an amount of less than 0.1 wt%, since the flexibility of the electrode is not secured, electrode cracks may be induced due to the volume expansion during the assembly of the electrode or charge and discharge. Also, in a case in which the third binder resin is included in an amount of greater than 5.0 wt%, since battery capacity is reduced due to a decrease in the amount of the negative electrode active material and the resistance in the electrode is increased, a side reaction that degrades the life characteristics of the battery may occur.

### (2-5) Conductive Agent

Also, the negative electrode active material slurry of the present disclosure may additionally include a conductive agent to further improve conductivity of the negative electrode active material.

Any conductive agent may be used without particular limitation so long as it has conductivity without causing chemical changes in the battery, and representative examples thereof may be at least one of a single-walled carbon nanotube (SWCNT), a thin-walled carbon nanotube (TWCNT), a multi-walled carbon nanotube (MWCNT), carbon fibers, and graphene.

The conductive agent may be included in an amount of 1.0 wt% to 30 wt%, preferably 1.0 wt% to 20 wt%, and more preferably 1.0 wt% to 10 wt% based on a total weight of a negative electrode active material layer.

If the conductive agent is included in an amount of less than 1.0 wt%, it is difficult to expect an effect of improving electrical conductivity or the electrochemical properties of the battery may be deteriorated. Also, if the conductive agent is included in an amount of greater than 20.0 wt%, since a ratio of the silicon-based negative electrode active material and the binder may be relatively decreased, the battery capacity and energy density may be reduced.

### (2-6) Solvent

The negative electrode active material slurry of the present disclosure may include a solvent.

The solvent may include water or an organic solvent such as NMP and alcohol, and may be used in an amount such that desirable viscosity is obtained when the negative electrode active material, the binder composition, and optionally the conductive agent are included. For example, the solvent may be included such that a concentration of the solid content in the negative electrode active material slurry is in a range of 50 wt% to 75 wt%, preferably, 40 wt% to 70 wt%.

A remaining portion excluding the silicon-based negative electrode active material, the binder composition, the carbon-based negative electrode active material, the third binder resin, and the conductive agent in the negative electrode active material slurry of the present disclosure may include the solvent unless otherwise specified.

The negative electrode active material slurry of the present disclosure may be prepared by dissolving or dispersing the silicon-based negative electrode active material, the binder composition, and optionally at least one of the carbon-based negative electrode active material, the third binder resin, and the conductive agent in the solvent.

### Negative Electrode

In another embodiment, the present disclosure provides a negative electrode including a negative electrode current collector; and a negative electrode active material layer disposed on at least one surface of the negative electrode current collector, wherein the negative electrode active material layer is formed by applying the negative electrode active material slurry of the present disclosure.

The negative electrode current collector generally has a thickness of 3 µm to 500 µm. The negative electrode current collector is not particularly limited as long as it has high conductivity without causing chemical changes in the battery, and, for example, copper, stainless steel, aluminum, nickel, titanium, fired carbon, copper or stainless steel that is surface-treated with one of carbon, nickel, titanium, silver, or the like, and an aluminum-cadmium alloy may be used. Also, similar to a positive electrode current collector, microscopic irregularities may be formed on the surface of the negative electrode current collector to improve adhesion of the negative electrode active material, and the negative electrode current collector may be used in various shapes such as that of a film, a sheet, a foil, a net, a porous body, a foam body, a nonwoven fabric body, and the like.

The negative electrode of the present disclosure may be prepared by a method of preparing a negative electrode which is known in the art. For example, the negative electrode may be prepared by a method in which the negative electrode current collector is coated with the negative electrode active material slurry, rolled and dried to form a negative electrode active material layer, or may be prepared by casting a negative electrode active material layer using the negative electrode active material slurry on a separate support and then laminating a film separated from the support on the negative electrode current collector.

The negative electrode of the present disclosure may have an adhesion of 24 gf/20 mm to 25 gf/20 mm, and may have an energy efficiency of 96% or more in a 100-cycle lifetime evaluation.

With respect to the adhesion, after cutting the rolled electrode into a size of 15 cm × 2 cm, an electrode surface was adhered to a slide glass with a double-sided tape, three samples for a peel test were prepared by lamination, each sample was then loaded into a UTM (Universal Testing Machine), and adhesiveness of each electrode was calculated by measuring peel resistance (gf/cm) which was obtained by performing a 90° peel test.

### Secondary Battery

Furthermore, in another embodiment of the present disclosure, a lithium secondary battery including the negative electrode of the present disclosure is provided.

Specifically, the lithium secondary battery includes a positive electrode, a negative electrode, a separator disposed between the positive electrode and the negative electrode, and an electrolyte, wherein the negative electrode may include the negative electrode of the present disclosure.

In this case, since the negative electrode of the present disclosure has been described above, a description thereof will be omitted and other components will be described below.

### (3-1) Positive Electrode

The positive electrode according to the present disclosure may include a positive electrode active material layer including a positive electrode active material, and, if necessary, the positive electrode active material layer may further include a conductive agent and/or a binder.

The positive electrode active material is a compound capable of reversibly intercalating and deintercalating lithium, wherein the positive electrode active material may specifically include a lithium composite metal oxide including lithium and at least one metal such as cobalt, manganese, nickel, or aluminum.

Specifically, the positive electrode active material may include lithium-cobalt-based oxide (e.g., LiCoO₂, etc.), lithium-manganese-based oxide (e.g., LiMnO₂, LiMn₂O₄, etc.), lithium-nickel-based oxide (e.g., LiNiO₂, etc.), lithium-nickel-manganese-based oxide (e.g., LiNi_{1-Y}Mn_{Y}O₂ (where 0<Y<1), LiMn_{2-Z}Ni_{Z}O₄ (where 0<Z<2), etc.), lithium-nickel-cobalt-based oxide (e.g., LiNi_{1-Y1}Co_{Y1}O₂ (where 0<Y1<1), etc.), lithium-manganese-cobalt-based oxide (e.g., LiCo_{1-Y2}Mn_{Y2}O₂ (where 0<Y2<1), LiMn_{2-Z1}Co_{Z1}O₄ (where 0<Z1<2), etc.), lithium-nickel-manganese-cobalt-based oxide (e.g., Li (NiₚCo_{q}Mnᵣ₁)O₂ (where 0<p<1, 0<q<1, 0<r1<1, and p+q+r1=1) or Li(Niₚ₁Co_{q1}Mnᵣ₂)O₄ (where 0<p1<2, 0<q1<2, 0<r2<2, and p1+q1+r2=2), etc.), or lithium-nickel-cobalt-transition metal (M) oxide (e.g., Li (Niₚ₂Co_{q2}Mnᵣ₃Mₛ₂)O₂ (where M is selected from the group consisting of aluminum (Al), iron (Fe), vanadium (V), chromium (Cr), titanium (Ti), tantalum (Ta), magnesium (Mg), titanium (Ti), and molybdenum (Mo), and p2, q2, r3, and s2 are atomic fractions of each independent elements, wherein 0<p2<1, 0<q2<1, 0<r3<1, 0<S2<1, and p2+q2+r3+S2=1), etc.), and any one thereof or a mixture of two or more thereof may be included.

Among these materials, in terms of the improvement of capacity characteristics and stability of the battery, the positive electrode active material may include at least one selected from the group consisting of lithium-cobalt oxide, lithium-manganese-based oxide, lithium-nickel-manganese-cobalt-based oxide, and lithium-nickel-cobalt-transition metal (M) oxide.

Specifically, the positive electrode active material may include at least one selected from a lithium-nickel-manganese-cobalt-based oxide having a nickel content of 55 atm% or more and a lithium-nickel-cobalt-transition metal (M) oxide having a nickel content of 55 atm% or more. Specifically, the positive electrode active material may include a lithium-nickel-manganese-cobalt-based oxide represented by Formula 1 below.

[Formula 1] Li(NiₐCo_{b}Mn_{c}M_{d})O₂

In Formula 1,
M may be W, Cu, Fe, V, Cr, Ti, Zr, Zn, Al, In, Ta, Y, lanthanum (La), Sr, Ga, Sc, gadolinium (Gd), samarium (Sm), Ca, cerium (Ce), Nb, Mg, B, or Mo, and
a, b, c, and d are atomic fractions of independent elements, respectively,
wherein 0.55≤a<1, 0<b≤0.3, 0<c≤0.3, 0≤d≤0.1, and a+b+c+d=1.

Specifically, a, b, c, and d may satisfy 0.60≤a≤0.95, 0.01≤b≤0.20, 0.01≤c≤0.20, and 0≤d≤0.05, respectively.

More specifically, a, b, c, and d may satisfy 0.80≤a≤0.95, 0.02≤b≤0.15, 0.02≤c≤0.15, and 0≤d≤0.03, respectively.

Specifically, the positive electrode active material may include at least one selected from the group consisting of Li(Ni_{0.6}Mn_{0.2}Co_{0.2})O₂, Li(Ni_{0.65}Mn_{0.2}Co_{0.15})O₂, Li(Ni_{0.7}Mn_{0.2}Co_{0.1})O₂, Li(Ni_{0.8}Mn_{0.1}Co_{0.1})O₂, Li (Ni_{0.85}Co_{0.05}Mn_{0.08}Al_{0.02})O₂, and Li(Ni_{0.93}Co_{0.02}Mn_{0.03}Al_{0.02})O₂, as a representative example.

The positive electrode active material may be included in an amount of 80 wt% to 99 wt%, specifically, 90 wt% to 99 wt% based on a total weight of solid content in the positive electrode active material layer. In this case, since the energy density is decreased when the amount of the positive electrode active material is 80 wt% or less, the capacity may be reduced.

Any conductive agent may be used without particular limitation so long as it has conductivity without causing chemical changes in the battery, and, for example, a conductive material, such as: carbon black such as carbon black, acetylene black, Ketjen black, channel black, furnace black, lamp black, or thermal black; graphite powder such as natural graphite with a well-developed crystal structure, artificial graphite, or graphite; conductive fibers such as carbon fibers or metal fibers; conductive powder such as fluorocarbon powder, aluminum powder, and nickel powder; conductive whiskers such as zinc oxide whiskers and potassium titanate whiskers; conductive metal oxide such as titanium oxide; or polyphenylene derivatives, may be used.

The conductive agent is typically added in an amount of 1 wt% to 30 wt% based on the total weight of the solid content in the positive electrode active material layer.

The binder is a component that improves the adhesion between positive electrode active material particles and the adhesion between the positive electrode active material and a current collector, wherein the binder is commonly added in an amount of 1 wt% to 30 wt% based on the total weight of the solid content in the positive electrode active material layer. Examples of the binder may be a fluorine resin-based binder including polyvinylidene fluoride (PVDF) or polytetrafluoroethylene (PTFE); a rubber-based binder including a styrene-butadiene rubber (SBR), an acrylonitrile-butadiene rubber, or a styrene-isoprene rubber; a cellulose-based binder including carboxymethylcellulose (CMC), starch, hydroxypropylcellulose, or regenerated cellulose; a polyalcohol-based binder including polyvinyl alcohol; a polyolefin-based binder including polyethylene or polypropylene; a polyimide-based binder; a polyester-based binder; and a silane-based binder.

The positive electrode of the present disclosure as described above may be prepared according to a method of preparing a positive electrode which is known in the art. For example, the positive electrode may be prepared by a method in which a positive electrode current collector is coated with a positive electrode slurry, which is prepared by dissolving or dispersing the positive electrode active material, the binder, and/or the conductive agent in a solvent and then dried and rolled to form a positive electrode active material layer, or a method in which the positive electrode active material layer is cast on a separate support, and a film separated from the support is then laminated on the positive electrode current collector.

The positive electrode current collector is not particularly limited as long as it has conductivity without causing adverse chemical changes in the battery, and, for example, stainless steel, aluminum, nickel, titanium, fired carbon, or aluminum or stainless steel that is surface-treated with one of carbon, nickel, titanium, silver, or the like may be used.

The solvent may include an organic solvent, such as N-methyl-2-pyrrolidone (NMP), and may be used in an amount such that desirable viscosity is obtained when the positive electrode active material as well as optionally the binder and the conductive agent is included. For example, the solvent may be included in an amount such that a concentration of the solid content in the active material slurry including the positive electrode active material as well as optionally the binder and the conductive agent is in a range of 10 wt% to 90 wt%, preferably, 30 wt% to 80 wt%.

### (3-2) Separator

As the separator included in the lithium secondary battery of the present disclosure, a conventional porous polymer film commonly used, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, may be used alone or in a lamination therewith as the separator, and a typical porous nonwoven fabric, for example, a nonwoven fabric formed of high melting point glass fibers or polyethylene terephthalate fibers may be used, but the present disclosure is not limited thereto.

### (3-3) Electrolyte

As the electrolyte used in the present disclosure, various electrolytes which may be used in a lithium secondary battery, for example, an organic liquid electrolyte, an inorganic liquid electrolyte, a solid polymer electrolyte, a gel-type polymer electrolyte, a solid inorganic electrolyte, or a molten-type inorganic electrolyte may be used, and a type thereof is not particularly limited.

Specifically, the electrolyte may include an organic solvent and a lithium salt.

Any organic solvent may be used as the organic solvent without particular limitation so long as it may function as a medium through which ions involved in an electrochemical reaction of the battery may move. Specifically, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a double-bond aromatic ring or ether bond); amides such as dimethylformamide; dioxolanes such as 1,3-dioxolane; or sulfolanes may be used as the organic solvent. Among these solvents, the carbonate-based solvent is preferable, and a mixture of a cyclic carbonate (e.g., ethylene carbonate or propylene carbonate) having high ionic conductivity and high dielectric constant, which may increase charge/discharge performance of the battery, and a low-viscosity linear carbonate-based compound (e.g., ethylmethyl carbonate, dimethyl carbonate, or diethyl carbonate) is more preferable.

The lithium salt may be used without particular limitation as long as it is a compound capable of providing lithium ions used in the lithium secondary battery. Specifically, the lithium salt may include at least one of LiPF₆ and LiN(SO₂F)₂ (lithium bis(fluorosulfonyl)imide, LiFSI).

The lithium salt may additionally include at least one of LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, and LiB(C₂O₄)₂.

The lithium salt may be used in a concentration range of 0.1 M to 5.0 M, preferably, 0.1 M to 3.0 M. If the concentration of the lithium salt is included within the above range, since the electrolyte may have appropriate conductivity and viscosity, excellent performance of the electrolyte may be obtained and lithium ions may effectively move.

In addition to the essential components of the electrolyte, the electrolyte may additionally include other additives to improve the life characteristics of the battery, suppress the reduction in battery capacity, and improve the discharge capacity of the battery.

As a representative example of the other additives, at least one other additive selected from the group consisting of a cyclic carbonate-based compound, a halogen-substituted carbonate-based compound, a sultone-based compound, a sulfate-based compound, a borate-based compound, a nitrile-based compound, a benzene-based compound, an amine-based compound, a silane-based compound, and a lithium salt-based compound, which is different from the lithium salt included in the electrolyte, may be included.

Specifically, the other additives may include one selected from the group consisting of vinylene carbonate (VC), vinyl ethylene carbonate, fluoroethylene carbonate (FEC), 1,3-propane sultone (PS), 1,4-butane sultone, ethane sultone, 1,3-propene sultone (PRS), 1,4-butene sultone, 1-methyl-1,3-propene sultone, ethylene sulfate (Esa), trimethylene sulfate (TMS), methyl trimethylene sulfate (MTMS), tetraphenylborate, lithium oxalyldifluoroborate, succinonitrile, adiponitrile, acetonitrile, propionitrile, butyronitrile, valeronitrile, caprylonitrile, heptannitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, 4-fluorophenylacetonitrile, fluorobenzene, triethanolamine, ethylenediamine, tetravinylsilane, LiN(SO₂F)₂ (lithium bis(fluorosulfonyl)imide, LiFSI), LiN(SO₂CF₃)₅ (lithium bis(trifluoromethane sulfonyl)imide, LiTFSI), LiPO₂F₂, LiODFB, LiBOB (lithium bis(oxalato)borate (LiB(C₂O₄)₂), and LiBF₄, or a mixture of two or more thereof.

The other additives may be included in an amount of 0.01 wt% to 20 wt% based on a total weight of the electrolyte, and may preferably be included in an amount of 0.05 wt% to 5.0 wt%. If the amount of the other additives is less than 0.01 wt%, effects of improving low-temperature output, high-temperature storage characteristics, and high-temperature life characteristics of the battery are insignificant, and if the amount of the other additives is greater than 20 wt%, there is a possibility that a side reaction in the electrolyte occurs excessively during charge and discharge of the battery. Particularly, since the additives for forming an SEI film may not be sufficiently decomposed at high temperatures when an excessive amount thereof is added, the additives for forming an SEI film may be present in the form of an unreacted material or precipitates in the electrolyte at room temperature. Accordingly, a side reaction may occur in which life or resistance characteristics of the secondary battery are degraded.

A shape of the lithium secondary battery of the present disclosure is not particularly limited, but a cylindrical type using a can, a prismatic type, a pouch type, or a coin type may be used.

Hereinafter, the present disclosure will be described in detail, according to specific examples. The invention may, however, be embodied in many different forms and should not be construed as being limited to the embodiments set forth herein. Rather, these example embodiments are provided so that this description will be thorough and complete, and will fully convey the scope of the present disclosure to those skilled in the art.

### [Examples]

### I. Binder Resin Preparation

### Preparation Example 1.

Polyacrylic acid (Sigma-Aldrich product, weight-average molecular weight: 750,000 g/mol) and lithium hydroxide (Sigma-Aldrich product, LiOH·H₂O) were added into a stirrer such that a molar ratio was 1:1, and dissolved in water at a temperature of 25°C. Thereafter, stirring was performed until a pH reached 7 to prepare a lithium-substituted polyacrylic acid (weight-average molecular weight: 750,000 g/mol) binder.

### Preparation Example 2.

Carboxymethyl cellulose (Sigma-Aldrich product, weight-average molecular weight: 250,000 g/mol) and lithium hydroxide (Sigma-Aldrich product, LiOH·H₂O) were added into a stirrer such that a molar ratio was 1:1, and dissolved in water at a temperature of 50°C. Thereafter, stirring was performed until a pH reached 7 to prepare a lithium-substituted carboxymethyl cellulose (weight-average molecular weight: 250,000 g/mol).

### Preparation Example 3.

Polyacrylic acid (Sigma-Aldrich product, weight-average molecular weight: 290,000 g/mol) and lithium hydroxide (Sigma-Aldrich product, LiOH·H₂O) were added into a stirrer such that a molar ratio was 1:1, and dissolved in water at a temperature of 25°C. Thereafter, stirring was performed until a pH reached 7 to prepare a lithium-substituted polyacrylic acid (weight-average molecular weight: 290,000 g/mol) binder.

### Preparation Example 4.

Polyacrylic acid (Sigma-Aldrich product, weight-average molecular weight: 1,600,000 g/mol) and lithium hydroxide (Sigma-Aldrich product, LiOH·H₂O) were added into a stirrer such that a molar ratio was 1:1, and dissolved in water at a temperature of 25°C. Thereafter, stirring was performed until a pH reached 7 to prepare a lithium-substituted polyacrylic acid (weight-average molecular weight: 1,600,000 g/mol) binder.

### Preparation Example 5.

Carboxymethyl cellulose (Sigma-Aldrich product, weight-average molecular weight: 40,000 g/mol) and lithium hydroxide (Sigma-Aldrich product, LiOH·H₂O) were added into a stirrer such that a molar ratio was 1:1, and dissolved in water at a temperature of 50°C. Thereafter, stirring was performed until a pH reached 7 to prepare a lithium-substituted carboxymethyl cellulose (weight-average molecular weight: 40,000 g/mol).

### Preparation Example 6.

Carboxymethyl cellulose (Sigma-Aldrich product, weight-average molecular weight: 1,100,000 g/mol) and lithium hydroxide (Sigma-Aldrich product, LiOH·H₂O) were added into a stirrer such that a molar ratio was 1:1, and dissolved in water at a temperature of 50°C. Thereafter, stirring was performed until a pH reached 7 to prepare a lithium-substituted carboxymethyl cellulose (weight-average molecular weight: 1,100,000 g/mol).

### II. Secondary Battery Preparation

### Example 1.

### (Binder Composition Preparation)

The lithium-substituted polyacrylic acid (weight-average molecular weight: 750,000 g/mol) prepared in Preparation Example 1, as a first binder resin, and the lithium-substituted carboxymethyl cellulose (weight-average molecular weight: 250,000 g/mol) prepared in Preparation Example 2, as a second binder resin, were dissolved in water at a weight ratio of 3:7 to prepare a 1.0 wt% binder composition (viscosity: 3,000 cP, B-type viscometer (TOKIMEC), 25°C, 2.5 wt% aqueous solution).

### (Negative Electrode Preparation)

A negative electrode slurry (solid content: 60 wt%) was prepared by adding a negative electrode active material (graphite and SiO = 95:5 weight ratio), the above-prepared binder composition, a styrene-butadiene rubber as a third binder resin, and a conductive agent (carbon black) to water, as a solvent, in a weight ratio of 97:1:1:1. The negative electrode slurry was applied (13 mg/cm²) onto a 10 µm thick copper (Cu) thin film as a negative electrode current collector, dried, and then roll-pressed to prepare a negative electrode.

### (Positive Electrode Preparation)

A positive electrode slurry (solid content 75.0 wt%) was prepared by adding positive electrode active material particles (Li(Ni_{0.93}Co_{0.02}Mn_{0.03}Al_{0.02})O₂), carbon black as a conductive agent, and polyvinylidene fluoride, as a binder, to N-methyl-2-pyrrolidone (NMP), as a solvent, in a weight ratio of 98:0.8:1.2. The positive electrode slurry was applied (25 mg/cm²) onto a 15 µm thick positive electrode current collector (Al thin film), dried, and then roll-pressed to prepare a positive electrode.

### (Secondary Battery Preparation)

An electrode assembly was prepared by disposing a porous polypropylene separator between the above-prepared positive electrode and negative electrode, and then accommodated in a battery case, and an electrolyte (EC:EMC:DMC = 20:10:70 volume ratio, 0.6 M LiPF₆, 0.6 M LiFSI) was injected to prepare a lithium secondary battery.

### Example 2.

### (Binder Composition Preparation)

The lithium-substituted polyacrylic acid (weight-average molecular weight: 750,000 g/mol) prepared in Preparation Example 1, as a first binder resin, and the lithium-substituted carboxymethyl cellulose (weight-average molecular weight: 250,000 g/mol) prepared in Preparation Example 2, as a second binder resin, were dissolved in water at a weight ratio of 5:5 to prepare a 1.0 wt% binder composition (viscosity: 3,000 cP, B-type viscometer (TOKIMEC), 25°C, 2.5 wt% aqueous solution).

### (Secondary Battery Preparation)

A negative electrode and a lithium secondary battery including the same were prepared in the same manner as in Example 1 except that the above-prepared binder composition was used during the preparation of the negative electrode.

### Example 3.

### (Binder Composition Preparation)

The lithium-substituted polyacrylic acid (weight-average molecular weight: 750,000 g/mol) prepared in Preparation Example 1, as a first binder resin, and the lithium-substituted carboxymethyl cellulose (weight-average molecular weight: 250,000 g/mol) prepared in Preparation Example 2, as a second binder resin, were dissolved in water at a weight ratio of 2:8 to prepare a 1.0 wt% binder composition (viscosity: 3,500 cP, B-type viscometer (TOKIMEC), 25°C, 2.5 wt% aqueous solution).

### (Secondary Battery Preparation)

A negative electrode and a lithium secondary battery including the same were prepared in the same manner as in Example 1 except that the above-prepared binder composition was used during the preparation of the negative electrode.

### Example 4.

### (Binder Composition Preparation)

The lithium-substituted polyacrylic acid (weight-average molecular weight: 750,000 g/mol) prepared in Preparation Example 1, as a first binder resin, and the lithium-substituted carboxymethyl cellulose (weight-average molecular weight: 250,000 g/mol) prepared in Preparation Example 2, as a second binder resin, were dissolved in water at a weight ratio of 6:4 to prepare a 1.0 wt% binder composition (viscosity: 3,400 cP, B-type viscometer (TOKIMEC), 25°C, 2.5 wt% aqueous solution).

### (Secondary Battery Preparation)

A negative electrode and a lithium secondary battery including the same were prepared in the same manner as in Example 1 except that the above-prepared binder composition was used during the preparation of the negative electrode.

### Comparative Example 1.

### (Binder Composition Preparation)

The lithium-substituted polyacrylic acid prepared in Preparation Example 1 was dissolved alone in water to prepare a 2.5 wt% binder composition (viscosity: 2,400 cP).

### (Secondary Battery Preparation)

A negative electrode and a lithium secondary battery including the same were prepared in the same manner as in Example 1 except that the above-prepared binder composition was used during the preparation of the negative electrode.

### Comparative Example 2.

### (Binder Composition Preparation)

The lithium-substituted carboxymethyl cellulose prepared in Preparation Example 2 was dissolved alone in water to prepare a 2.5 wt% binder composition (viscosity: 3,000 cP).

### (Secondary Battery Preparation)

A negative electrode and a lithium secondary battery including the same were prepared in the same manner as in Example 1 except that the above-prepared binder composition was used during the preparation of the negative electrode.

### Comparative Example 3.

### (Binder Composition Preparation)

A lithium-unsubstituted polyacrylic acid (manufactured by Aldrich, weight-average molecular weight: 750,000 g/mol), as a first binder resin, and the lithium-substituted carboxymethyl cellulose (weight-average molecular weight: 250,000 g/mol) prepared in Preparation Example 2, as a second binder resin, were dissolved in water at a weight ratio of 5:5 to prepare a 1.0 wt% binder composition (viscosity: 2,800 cP, B-type viscometer (TOKIMEC), 25°C, 2.5 wt% aqueous solution).

### (Secondary Battery Preparation)

A negative electrode and a lithium secondary battery including the same were prepared in the same manner as in Example 1 except that the above-prepared binder composition was used during the preparation of the negative electrode.

### Comparative Example 4.

### (Binder Composition Preparation)

The lithium-substituted polyacrylic acid (weight-average molecular weight: 750,000 g/mol) prepared in Preparation Example 1, as a first binder resin, and a lithium-unsubstituted carboxymethyl cellulose (manufactured by LG ensol, weight-average molecular weight: 250,000 g/mol), as a second binder resin, were dissolved in water at a weight ratio of 5:5 to prepare a 1.0 wt% binder composition (viscosity: 3,100 cP, B-type viscometer (TOKIMEC), 25°C, 2.5 wt% aqueous solution).

### (Secondary Battery Preparation)

A negative electrode and a lithium secondary battery including the same were prepared in the same manner as in Example 1 except that the above-prepared binder composition was used during the preparation of the negative electrode.

### Comparative Example 5.

### (Binder Composition Preparation)

The lithium-substituted polyacrylic acid (weight-average molecular weight: 290,000 g/mol) prepared in Preparation Example 3, as a first binder resin, and the lithium-substituted carboxymethyl cellulose (weight-average molecular weight: 250,000 g/mol) prepared in Preparation Example 2, as a second binder resin, were dissolved in water at a weight ratio of 5:5 to prepare a 1.0 wt% binder composition (viscosity: 2,100 cP, B-type viscometer (TOKIMEC), 25°C, 2.5 wt% aqueous solution).

### (Secondary Battery Preparation)

A negative electrode and a lithium secondary battery including the same were prepared in the same manner as in Example 1 except that the above-prepared binder composition was used during the preparation of the negative electrode.

### Comparative Example 6.

### (Binder Composition Preparation)

The lithium-substituted polyacrylic acid (weight-average molecular weight: 1,600,000 g/mol) prepared in Preparation Example 4, as a first binder resin, and the lithium-substituted carboxymethyl cellulose (weight-average molecular weight: 250,000 g/mol) prepared in Preparation Example 2, as a second binder resin, were dissolved in water at a weight ratio of 5:5 to prepare a 1.0 wt% binder composition (viscosity: 3,400 cP, B-type viscometer (TOKIMEC), 25°C, 2.5 wt% aqueous solution).

### (Secondary Battery Preparation)

A negative electrode and a lithium secondary battery including the same were prepared in the same manner as in Example 1 except that the above-prepared binder composition was used during the preparation of the negative electrode.

### Comparative Example 7.

### (Binder Composition Preparation)

The lithium-substituted polyacrylic acid (weight-average molecular weight: 750,000 g/mol) prepared in Preparation Example 1, as a first binder resin, and the lithium-substituted carboxymethyl cellulose (weight-average molecular weight: 40,000 g/mol) prepared in Preparation Example 5, as a second binder resin, were dissolved in water at a weight ratio of 5:5 to prepare a 1.0 wt% binder composition (viscosity: 2,200 cP, B-type viscometer (TOKIMEC), 25°C, 2.5 wt% aqueous solution).

### (Secondary Battery Preparation)

A negative electrode and a lithium secondary battery including the same were prepared in the same manner as in Example 1 except that the above-prepared binder composition was used during the preparation of the negative electrode.

### Comparative Example 8.

### (Binder Composition Preparation)

The lithium-substituted polyacrylic acid (weight-average molecular weight: 750,000 g/mol) prepared in Preparation Example 1, as a first binder resin, and the lithium-substituted carboxymethyl cellulose (weight-average molecular weight: 1,100,000 g/mol) prepared in Preparation Example 6, as a second binder resin, were dissolved in water at a weight ratio of 5:5 to prepare a 1.0 wt% binder composition (viscosity: 2,700 cP, B-type viscometer (TOKIMEC), 25°C, 2.5 wt% aqueous solution).

### (Secondary Battery Preparation)

A negative electrode and a lithium secondary battery including the same were prepared in the same manner as in Example 1 except that the above-prepared binder composition was used during the preparation of the negative electrode.

### [Experimental Examples]

### Experimental Example 1. Negative Electrode Adhesion Evaluation

After cutting each of the negative electrodes prepared in Examples 1 and 2 and the negative electrodes prepared in Comparative Examples 1, 3 to 5, and 7 into a size of 15 cm × 2 cm, an electrode surface was adhered to a slide glass with a double-sided tape, three samples for a peel test were prepared for each negative electrode by lamination.

The samples were then loaded into a UTM at a spacing of 20 mm, peel resistance (gf/cm), which was obtained by performing a 90° peel test (propagation speed: 300 mm/min), was measured, adhesiveness of each electrode was calculated therefrom, and the results thereof are presented in Table 1 below.

**[Table 1]**

| | Mixing ratio of the first binder resin to the second binder resin | Adhesion (gf) |
|---|---|---|
| Example 1 | 3:7 | 24.1 |
| Example 2 | 5:5 | 23.2 |
| Comparative Example 1 | 1:0 | 17.3 |
| Comparative Example 3 | 5:5 | 22.9 |
| Comparative Example 4 | 5:5 | 23.0 |
| Comparative Example 5 | 5:5 | 17.9 |
| Comparative Example 7 | 5:5 | 22.4 |

Referring to Table 1, it may be understood that adhesions of the negative electrodes prepared by using the binder compositions of Examples 1 and 2 were 23.2 gf or more, but adhesions of the negative electrodes prepared by using the binder compositions of Comparative Examples 1, 3 to 5, and 7 were inferior to those of Examples 1 and 2.

### Experimental Example 2. Cycle Characteristics Evaluation

The lithium secondary batteries prepared in Examples 1 to 4 and the lithium secondary batteries prepared in Comparative Examples 2 to 8 were constant current-constant voltage charged at a C-rate of 0.3 C to 4.2 V, constant voltage charged until the current reached 1/20 C, and then discharged at a C-rate of 0.5 C to 2.85 V to perform initial charge, and initial capacity was measured.

Subsequently, constant current-constant voltage charging at a C-rate of 0.3 C to 4.2 V, constant voltage charging until the current reached 1/20 C, and then discharging at a C-rate of 0.5 C to 2.85 V were set as one cycle, 100 cycles were performed, and capacity after 100 cycles was then measured.

Then, after capacity retention after 100 cycles was calculated, the results thereof are presented in Table 2 below.

**[Table 2]**

| | Capacity retention after 100 cycles (%) |
|---|---|
| Example 1 | 96.5 |
| Example 2 | 96.6 |
| Example 3 | 95.8 |
| Example 4 | 96.0 |
| Comparative Example 2 | 95.4 |
| Comparative Example 3 | 94.3 |
| Comparative Example 4 | 94.0 |
| Comparative Example 5 | 92.7 |
| Comparative Example 6 | 93.0 |
| Comparative Example 7 | 93.6 |
| Comparative Example 8 | 93.6 |

Referring to Table 2, with respect to the lithium secondary batteries of Comparative Examples 2 to 8, it may be confirmed that cycle characteristics are degraded in comparison to those of Examples 1 to 4.

## Claims

1. A binder composition comprising:
a first binder resin, a second binder resin, and water,
wherein the first binder resin comprises a lithium-substituted polyacrylic acid having a weight-average molecular weight (Mw) of 300,000 g/mol to 1,500,000 g/mol, and
wherein the second binder resin comprises a lithium-substituted carboxymethyl cellulose having a weight-average molecular weight (Mw) of 50,000 g/mol to 1,000,000 g/mol.

2. The binder composition of claim 1, wherein the weight-average molecular weight (Mw) of the first binder resin is in a range of 500,000 g/mol to 1,500,000 g/mol.

3. The binder composition of claim 1, wherein the weight-average molecular weight (Mw) of the second binder resin is in a range of 100,000 g/mol to 1,000,000 g/mol.

4. The binder composition of claim 1, wherein a total amount of the first binder resin and the second binder resin is in a range of 0.2 wt% to 5.0 wt% based on a total amount of the binder composition.

5. The binder composition of claim 1, wherein a weight ratio of the first binder resin to the second binder resin is in a range of 3:7 to 5:5.

6. The binder composition of claim 1, wherein viscosity of the binder composition is in a range of 500 cP to 50,000 cP in a 2.5 wt% aqueous solution state at 25°C.

7. A negative electrode active material slurry comprising a silicon-based negative electrode active material and the binder composition of claim 1.

8. The negative electrode active material slurry of claim 7, further comprising a carbon-based negative electrode active material.

9. The negative electrode active material slurry of claim 8, wherein a weight ratio of the carbon-based negative electrode active material to the silicon-based negative electrode active material is in a range of 80:20 to 99:1.

10. The negative electrode active material slurry of claim 7, wherein the binder composition is included in an amount of 0.1 wt% to 5.0 wt% based on a total weight of the negative electrode active material slurry.

11. The negative electrode active material slurry of claim 7, further comprising a third binder resin.

12. The negative electrode active material slurry of claim 11, wherein the third binder resin is a styrene-butadiene rubber.

13. The negative electrode active material slurry of claim 11, wherein the third binder resin is included in an amount of 0.1 wt% to 5.0 wt% based on a total weight of the negative electrode active material slurry.

14. The negative electrode active material slurry of claim 7, further comprising a conductive agent.

15. The negative electrode active material slurry of claim 14, wherein the conductive agent is at least one of a SWCNT (single-walled carbon nanotube), a TWCNT (thin-walled carbon nanotube), a MWCNT (multi-walled carbon nanotube), carbon fibers, and graphene.

16. A negative electrode comprising:
a negative electrode current collector; and
a negative electrode active material layer disposed on at least one surface of the negative electrode current collector,
wherein the negative electrode active material layer is formed by applying the negative electrode active material slurry of claim 7.

17. The negative electrode of claim 16, wherein the negative electrode has an adhesion of 23.2 gf/20 mm to 25 gf/20 mm, and has an energy efficiency of 96% or more in a 100-cycle lifetime evaluation.

18. A lithium secondary battery comprising the negative electrode of claim 16.
